# EUROPÄISCHE PATENTSCHRIFT

(11) **EP 4 353 480 B1**
(45) Veröffentlichungstag und Bekanntmachung des Hinweises auf die Patenterteilung: **06.08.2025**
(21) Anmeldenummer: 23192712.0
(22) Anmeldetag: 22.08.2023
(51) Int. Cl.: B33Y 80/00, F16H 57/02, F16H 57/00

(54) **GETRIEBE MIT WELLE MIT ADDITIVEM DRUCKKAMM UND VERFAHREN ZUR HERSTELLUNG EINER WELLE**
GEARBOX WITH SHAFT WITH ADDITIVE PRESSURE COMB AND METHOD FOR PRODUCING A SHAFT
TRANSMISSION AVEC ARBRE AVEC PEIGNE DE PRESSION ADDITIF ET PROCÉDÉ DE FABRICATION D'UN ARBRE

(30) Priorität: 13.10.2022 DE 102022126742
(43) Veröffentlichungstag der Anmeldung: 17.04.2024
(73) Patentinhaber: Bodenmüller Hörburger Schratt Antriebstechnik GmbH & Co. KG, 87437 Kempten (DE)
(72) Erfinder: HÖRBURGER, Christian, 87448 Waltenhofen/Hegge (DE)
(74) Vertreter: Winter, Brandl - Partnerschaft mbB

(56) Entgegenhaltungen:
- EP-A1- 1 493 947
- DE-A1- 102014 207 431
- US-A1- 2015 323 053
- US-A1- 2020 016 688

## Beschreibung

Die Erfindung betrifft ein Getriebe mit einer einen integralen Verzahnungsabschnitt aufweisenden Welle und einem mit dem Verzahnungsabschnitt in Zahneingriff befindlichen Zahnrad, wobei in Bezug auf die Welle zu zumindest einer axialen Seite des Verzahnungsabschnittes ein Druckkamm an der Welle angebracht ist, welcher Druckkamm derart dimensioniert ist, dass er den Verzahnungsabschnitt in radialer Richtung zumindest teilweise seitlich überdeckt (d.h., dass der Druckkamm zumindest teilweise radial auf gleicher Höhe mit dem Zahnrad angeordnet ist).

Aus dem Stand der Technik ist bereits bekannt, Druckkämme seitlich von Verzahnungsabschnitten von Wellen anzuordnen, um eine axiale Lager- / Anschlagsfläche für das entsprechende, mit dem Verzahnungsabschnitt in Zahneingriff befindliche Zahnrad zur Verfügung zu stellen und somit eine sichere Führung des Zahnrades im Betrieb zu gewährleisten. Einen gattungsgemäßen Stand der Technik zeigt beispielsweise die DE 10 2014 207 431 A1. Weiterer Stand der Technik ist aus der EP 1 493 947 A1 und der US 2015/323053 A1 bekannt.

Dabei ist es prinzipiell bekannt, für eine möglichst hohe Festigkeit der Druckkämme, diese unmittelbar beim Urformen der Welle mit auszubilden. Durch die relativ nahe Anordnung der Druckkämme seitlich zu dem Verzahnungsabschnitt können jedoch unter Umständen nicht mehr die bisher üblichen Werkzeuge verwendet werden, um den Verzahnungsabschnitt nach dem Urformen der Welle vollständig auszuformen oder nachzuarbeiten, insbesondere zu schleifen. Der Herstellaufwand wird dadurch nachteilig beeinflusst. Nachteilig ist zudem ein größerer Platzbedarf zwischen der Verzahnung und dem Druckkamm hinsichtlich des Materialbedarfs (i.e. die Radscheibe wird breiter) oder der Austauschbarkeit von vorhandenen Systemen. Das heißt, dass der Bauraumbedarf bei herkömmlichem Werkzeugeinsatz leider sehr groß ist. Dies ist ebenfalls nachteilig.

Es ist daher Aufgabe der vorliegenden Erfindung, ein Getriebe zur Verfügung zu stellen, dessen Bestandteile ausreichend robust ausgebildet und gelagert sind, zugleich jedoch mit einem möglichst geringen Aufwand herstellbar sind.

Dies wird erfindungsgemäß dadurch gelöst, dass der Druckkamm als ein additiv gefertigter, auf der Welle aufgebrachter Druckkamm ausgebildet ist.

Durch das erfindungsgemäße additive Aufbringen des Druckkamms ist es möglich den Verzahnungsabschnitt zunächst mit üblichen Werkzeugen, wie Räumwerkzeugen und Schleifscheiben, auf der Welle auszubilden und erst im Anschluss daran die Druckkämme additiv auf der Welle aufzubringen, wobei zugleich eine möglichst steife Ausbildung der Druckkämme gewährleistet ist. Dadurch wird der Herstellaufwand für in ihrer Festigkeit gleichwertige integrale Druckkämme deutlich erleichtert.

Weitergehende vorteilhafte Ausführungsformen sind mit den Unteransprüchen beansprucht und nachfolgend näher erläutert.

Demnach ist es prinzipiell vorteilhaft, wenn der Druckkamm als vollständig umlaufender, das heißt ringförmiger Steg ausgebildet ist. Dadurch ist der Druckkamm möglichst robust realisiert.

Ist der Druckkamm mittels selektivem Lasersintern / Laserauftragsschweißen aufgebracht, wird die Welle hinsichtlich ihres Gefüges, insbesondere im Verzahnungsabschnitt, möglichst wenig durch das Aufbringen des Druckkamms beeinflusst.

Ist gar auf beiden einander abgewandten axialen Seiten des Verzahnungsabschnittes jeweils ein Druckkamm mittels additiver Fertigung auf der Welle aufgebracht, wird eine verlässliche Abstützung des Zahnrades gewährleistet. Selbst bei einer speziellen Ausführungsform, bei der nur ein einziger Druckkamm eingesetzt würde, könnte durch ein Um-/Übergreifen des Zahnrades um/über den Druckkamm, eine Anliegen des Zahnrades auf beiden Seiten des Druckkammes erreicht werde, um das Zahnrad auf beiden Stirnseiten des Druckkammes zu führen. Somit wäre auch wiederum eine verlässliche Abstützung realisiert.

Zudem ist es vorteilhaft, wenn ausschließlich ein Druckkamm ausschließlich auf einer axialen Seite des Verzahnungsabschnittes auf der Welle aufgebracht ist. Dies ergibt eine möglichst kompakte axiale Bauweise.

Für diese, ausschließlich einen Druckkamm aufweisende Ausführung ist es auch vorteilhaft, wenn an dem Zahnrad eine Abstützkontur ausgebildet ist, die sich axial beidseitig an dem ausschließlich einen Druckkamm abstützt. Damit wird die Lagerung des Zahnrades weiter vereinfacht. Ergo könnte das Zahnrad eine das Eingreifen des Druckkammes ermöglichende Nut aufweisen.

Ist der Druckkamm an einer axialen Stirnfläche oder an beiden axialen Stirnflächen gegenüber einer ausschließlich in radialer Richtung verlaufenden Radiallinie / Bezugslinie geneigt, wird die axiale Abstützung des Zahnrades weiter optimiert. Alternativ kann die axiale Kontaktfläche zwischen dem Druckkamm und dem Zahnrad ballig sein. Dabei kann der eine Partner oder beide Partner in der Kontaktfläche selbst ballig / konvex / nach Art einer gewölbten Freiform, bspw. als S-Form ausgebildet sein.

Als besonders vorteilhaft hat es sich herausgestellt, wenn diese Neigung zwischen 0,1° und 1,5° liegt.

Für eine möglichst verschleißfeste Ausbildung des Druckkamms ist es auch zweckmäßig, wenn der Druckkamm einen Grundkörper aus einem ersten Stahlwerkstoff sowie zumindest einen, stirnseitig an dem Grundkörper aufgebrachten Flankenbereich aus einem, sich von dem ersten Stahlwerkstoff unterscheidenden, zweiten Stahlwerkstoff aufweist. Der erste Stahlwerkstoff ist damit möglichst geschickt an den Werkstoff der Welle anpassbar, während der zweite Stahlwerkstoff für die gleitende Abstützung des Zahnrades ausgebildet ist. Insbesondere ist es dabei zweckmäßig, wenn der zweite Stahlwerkstoff eine höhere Grundhärte als der erste Stahlwerkstoff aufweist, das heißt nach einem Urformvorgang unmittelbar eine höhere Härte aufweist als der erste Stahlwerkstoff.

Ferner ist es zweckmäßig, wenn der Druckkamm zumindest an einer axialen Stirnfläche, weiter bevorzugt an beiden sich gegenüberliegenden axialen Stirnflächen, gehärtet, vorzugsweise nitriergehärtet, ist.

Des Weiteren betrifft die Erfindung ein Verfahren zur Herstellung einer verzahnten Welle für ein Getriebe, wobei in einem ersten Schritt ein Verzahnungsabschnitt der Welle als integraler Bestandteil der Welle hergestellt wird, wobei ein Teilkreisdurchmesser des Verzahnungsabschnittes größer als ein Durchmesser einer axial an den Verzahnungsabschnitt unmittelbar angrenzenden Mantelfläche der Welle ausgebildet ist, und wobei in einem zweiten Schritt auf der Mantelfläche ein den Verzahnungsabschnitt radial überdeckender Druckkamm mittels additiver Fertigung auf der Welle aufgebracht wird.

Hinsichtlich des Verfahrens ist es ferner vorteilhaft, wenn nach dem zweiten Schritt die Welle zumindest im Bereich des Verzahnungsabschnittes und des Druckkamms gehärtet, etwa nitriergehärtet, wird. Dadurch wird der Herstellaufwand weiter reduziert. Die Abfolge könnte auch sein: Verzahnung nitrieren, Druckkamm aufbringen, Druckkamm bearbeiten, ggf. Druckkamm wärmebehandeln und dann nochmals bearbeiten.

Die Erfindung wird nun nachfolgend anhand von Figuren näher erläutert, in welchem Zusammenhang auch verschiedene Ausführungsbeispiele dargestellt sind.

Es zeigen:
- Fig. 1: eine Längsschnittdarstellung eines Teils eines erfindungsgemäßen Getriebes nach einem ersten Ausführungsbeispiel, wobei eine eingesetzte, erfindungsgemäß ausgebildete integrale Welle zusammen mit dem sich daran im Zahneingriff befindlichen Zahnrad bzw. einer Radwelle, gut zu erkennen ist,
- Fig. 2: eine Längsschnittdarstellung der Welle nach Fig. 1 alleine betrachtet, unter Veranschaulichung einer geneigten axialen Stirnfläche eines Druckkamms, sowie
- Fig. 3: eine Längsschnittdarstellung einer Welle eines nach einem zweiten Ausführungsbeispiel ausgebildeten Getriebes, wobei die Welle nunmehr ausschließlich auf einer axialen Seite eines Verzahnungsabschnittes mit einem Druckkamm versehen ist.

Die Figuren sind lediglich schematischer Natur und dienen ausschließlich dem Verständnis der Erfindung. Die gleichen Elemente sind mit denselben Bezugszeichen versehen.

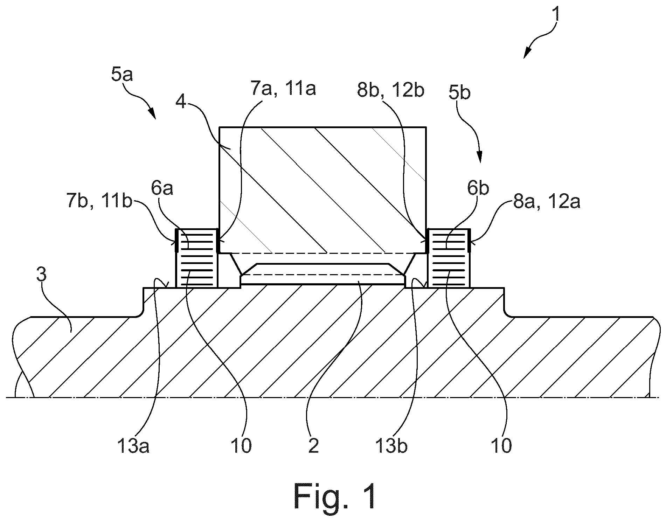

In Verbindung mit Fig. 1 wird ein Teil eines erfindungsgemäßen Getriebes 1 gemäß einem ersten Ausführungsbeispiel veranschaulicht. Das Getriebe 1 ist im Bereich einer stoffeinteilig / integral hergestellten Welle 3 sowie eines mit einem Verzahnungsabschnitt 2 der Welle 3 in Zahneingriff befindlichen Zahnrades 4 dargestellt. Durch die stoffeinteilige Ausbildung der Welle 3 kann diese auch als Ritzelwelle bezeichnet werden.

Zur axialen Abstützung des Zahnrades 4 relativ zur Welle 3 (axial bedeutet in Längsrichtung der Welle 3) ist zu jeder axialen Seite 5a, 5b des Verzahnungsabschnittes 2, im Bereich einer Mantelfläche 13a, 13b der Welle 3, ein Druckkamm 6a, 6b aufgebracht. Jene Mantelflächen 13a, 13b schließen axial unmittelbar an den Verzahnungsabschnitt 2 beidseitig an. Prinzipiell kann natürlich auch neben einem Druckkamm 10 in der Mantelfläche 13a oder 13b eine Nut (nicht dargestellt) vorhanden sein. Zu der ersten axialen Seite 5a ist somit der erste Druckkamm 6a auf der ersten Mantelfläche 13a aufgebracht, während zu der zweiten axialen Seite 5b der zweite Druckkamm 6b auf der zweiten Mantelfläche 13b aufgebracht ist.

Erfindungsgemäß ist jeder der beiden Druckkämme 6a, 6b mittels additivem Fertigungsverfahren, hier mittels selektivem Lasersintern auf die Welle 3 aufgebracht, sodass die Druckkämme 6a, 6b nach ihrer fertigen Herstellung einen stoffeinteiligen Bestandteil der Welle 3 bilden.

In dem ersten Ausführungsbeispiel bildet jeder Druckkamm 6a, 6b eine Stirnfläche (auch als axiale Fläche / Anschlagsfläche bezeichnet) aus, die unmittelbar zur gleitenden Axialabstützung des Zahnrad 4 dient. Dabei ist eine erste Stirnfläche 7a des ersten Druckkamms 6a und eine zweite Stirnfläche 8b des zweiten Druckkamms 6b unmittelbar zur gleitenden Axialabstützung des Zahnrad 4 ausgebildet. Die erste Stirnfläche 7a des ersten Druckkamms 6a und die zweite Stirnfläche 8b des zweiten Druckkamms 6b sind einander axial zugewandt.

Somit ist die erste Stirnfläche 7a des ersten Druckkamms 6a dem Verzahnungsabschnitt 2 axial zugewandt. Eine weitere, zweite Stirnfläche 7b des ersten Druckkamms 6a, die dem Verzahnungsabschnitt 2 abgewandt ist, hat in diesem ersten Ausführungsbeispiel keine weitere Funktion und dient somit nicht zur unmittelbaren Anlage an dem Zahnrad 4. Die zweite Stirnfläche 8b des zweiten Druckkamms 6b ist somit ebenfalls dem Verzahnungsabschnitt 2 axial zugewandt. Eine weitere erste Stirnfläche 8a des zweiten Druckkamms 6b, die dem Verzahnungsabschnitt 2 axial abgewandt ist, hat in diesem ersten Ausführungsbeispiel keine weitere Funktion und dient somit nicht zur unmittelbaren Anlage an dem Zahnrad 4. Mit anderen Worten ausgedrückt, weist somit jeder Druckkamm 6a, 6b in dem ersten Ausführungsbeispiel eine aktive Stirnfläche 7a oder 8b auf, die unmittelbar zur gleitenden Lagerung / Abstützung des Zahnrades 4 dient.

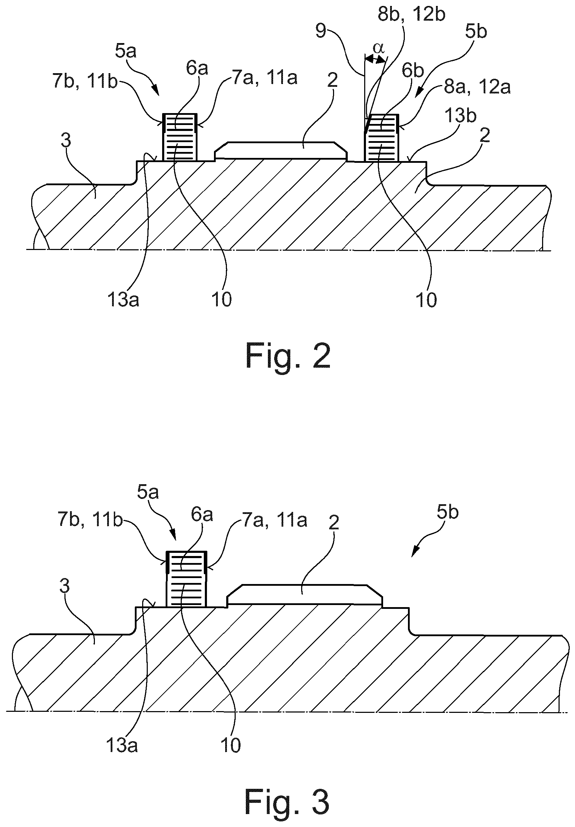

Des Weiteren, wie in Fig. 2 für die zweite Stirnfläche 8b exemplarisch angedeutet, ist jede unmittelbar zur gleitenden Axialabstützung des Zahnrads 4 dienende Stirnfläche (hier die erste Stirnfläche 7a des ersten Druckkamms 6a und die zweite Stirnfläche 8b des zweiten Druckkamms 6b) in einem Winkel α gegenüber einer ausschließlich in radialer Richtung verlaufenden Radiallinie 9 angestellt / geneigt. Der Winkel / Neigungswinkel α beträgt vorzugsweise zwischen 0,1° und 1,5°, hier ca. 1°. Die erste Stirnfläche 7a des ersten Druckkamms 6a und die zweite Stirnfläche 8b des zweiten Druckkamms 6b sind dabei gegensinnig zueinander geneigt und vorzugsweise (im Querschnitt betrachtet) gemäß zweier Schenkel eines radial nach außen geöffneten V's angestellt.

Ferner sei darauf hingewiesen, dass jeder Druckkamm 6a, 6b mit einem Grundkörper versehen ist, der aus einem ersten Stahlwerkstoff besteht. Der erste Stahlwerkstoff ist derart auf einen Grundwerkstoff der Welle 3 (wie Einsatzstahl, Nitrierstahl oder Vergütungsstahl), d.h. insbesondere des den Verzahnungsabschnitt 2 bildenden Bereichs, abgestimmt, sodass der erste Stahlwerkstoff bei dem additiven Fertigungsverfahren auf der Welle 3 mit einer ausreichend hohen Festigkeit aufgebracht wird.

Stirnseitig des Grundkörpers 10 (d.h. zu seinen axialen Seiten) sind Flankenbereiche 11a, 11b, 12a, 12b angebracht, die aus einem zweiten Stahlwerkstoff oder weiteren Stahlwerkstoffen bestehen, der sich hinsichtlich der Legierung von dem ersten Stahlwerkstoff unterscheidet. Jener zweite Stahlwerkstoff ist bevorzugt mit einer größeren Grundhärte als der erste Stahlwerkstoff ausgebildet oder weist weiter bevorzugt eine größere Geeignetheit für eine Nitrierhärtung auf als der erste Stahlwerkstoff. Der zweite Stahlwerkstoff weist im Vergleich zu dem ersten Stahlwerkstoff eine bessere Schleiffähigkeit, Nitrierbarkeit, Grundhärte und Tragfähigkeit auf.

Die Flankenbereiche 11a, 11b, 12a, 12b bilden dabei unmittelbar die jeweilige Stirnfläche 7a, 7b, 8a, 8b aus. **In** dem ersten Ausführungsbeispiel ist es in diesem Zusammenhang ausreichend, wenn nur der die erste Stirnfläche 7a des ersten Druckkamms 6a ausbildende erste Flankenbereich 11a und der die zweite Stirnfläche 8b des zweiten Druckkamms 6b ausbildende zweite Flankenbereich 12b aus diesem zweiten Stahlwerkstoff hergestellt sind, während die freien / inaktiven Flankenbereiche 11b und 12a ebenfalls aus dem ersten Stahlwerkstoff bestehen können.

In Verbindung mit Fig. 3 wird ein zweites Ausführungsbeispiel veranschaulicht, woraus erkennbar ist, dass es prinzipiell auch ausreichen kann, lediglich einen Druckkamm 6a oder 6b auf der Welle 3 aufzubringen. Hier ist jener erste Druckkamm 6a gewählt, der gemäß dem ersten Ausführungsbeispiel ebenfalls additiv gefertigt ist. Diesbezüglich sei darauf hingewiesen, dass der grundlegende Aufbau und die grundlegende Funktionsweise des zweiten Ausführungsbeispiels dem ersten Ausführungsbeispiel entsprechen, sodass lediglich die Unterschiede zum ersten Ausführungsbeispiel beschrieben sind.

Aufgrund der ausschließlich einseitigen Anbringung des (ersten) Druckkamms 6a axial neben dem Verzahnungsabschnitt 2 ist es weiter bevorzugt, den ersten Druckkamm 6a axial beidseitig, das heißt hinsichtlich seiner beiden (ersten und zweiten) Stirnflächen 7a, 7b als unmittelbar zur gleitenden Axialabstützung des Zahnrad 4 dienende Flächen umzusetzen. Somit sind beide Stirnflächen 7a, 7b des ersten Druckkamms 6a mit dem Neigungswinkel α angestellt. Die erste Stirnfläche 7a und die zweite Stirnfläche 7b des ersten Druckkamms 6a sind dabei gegensinnig zueinander geneigt und vorzugsweise (im Querschnitt betrachtet) gemäß zweier Schenkel eines radial nach innen geöffneten V's angestellt.

Ferner ist es bevorzugt, beide Flankenbereiche 11a und 11b (die die beiden Stirnflächen 7a, 7b ausbilden) aus dem zweiten Stahlwerkstoff zu fertigen und diesen zu härten.

Hinsichtlich eines erfindungsgemäßen Herstellverfahrens der gegenständlichen Welle 3 wird somit auch deutlich, dass in einem ersten Schritt (nach vorherigem Urformen (d.h. Gießen) der Welle 3) der Verzahnungsabschnitt 2 der Welle 3 als integraler Bestandteil der Welle 3 hergestellt wird. Dabei wird der Verzahnungsabschnitt 2 als integrales Stirnrad ausgebildet und sowohl die einzelnen Zähne ausgeformt als auch nachbearbeitet, insbesondere auch geschliffen. Ein Teilkreisdurchmesser des Verzahnungsabschnittes 2 ist größer als ein Durchmesser der axial an den Verzahnungsabschnitt 2 unmittelbar angrenzenden Mantelflächen 13a und 13b der Welle 3.

In einem zweiten Schritt werden danach auf jeder Mantelfläche 13a, 13b der Druckkamm 6a, 6b mittels additiver Fertigung auf der Welle 3 aufgebracht. Die Höhe (radiale Erstreckung) des jeweiligen Druckkamms 6a, 6b ist dabei derart, dass die Druckkämme 6a, 6b den Verzahnungsabschnitt 2 zumindest teilweise radial überdeckend / überragen / überlappen.

Mit anderen Worten ausgedrückt betrifft die Erfindung eine Ritzelwelle (Welle 3) mit mindestens einem Druckkamm 6a und/oder 6b. Die Ritzelwelle weist eine Drehachse auf, wobei sich mindestens eine Verzahnung (Verzahnungsabschnitt 2) entlang einer Umfangsrichtung erstreckt, wobei axial neben der Verzahnung einseitig oder beidseitig ein Druckkamm 6a, 6b angeordnet ist. Der Druckkamm 6a, 6b wird nach Fertigstellung der Verzahnung schichtweise aufgetragen, d.h. additiv gefertigt.

Der Druckkamm 6a, 6b kann sowohl aus dem Grundwerkstoff der Ritzelwelle als auch aus einem optimierten Werkstoff bestehen. Die Kontaktfläche (in Fign. 1 und 2 Stirnflächen 7a, 8b) zum Gegenrad (Zahnrad 4) weist einen Winkel α auf und kann sowohl aus dem Druckkammwerkstoff (erster Stahlwerkstoff) als auch aus einem abweichenden, optimierten Werkstoff (zweiter Stahlwerkstoff) bestehen. Der Vorteil der Idee liegt darin, dass die Verzahnung auch mit bewährten Schleifverfahren gefertigt werden kann, bei welchen ein Auslauf über die Verzahnung notwendig ist. Weiter besteht der Vorteil darin, dass der Druckkammwerkstoff wie auch der Werkstoff der Kontaktfläche auf die Beanspruchung abgestimmt werden kann. Ein weiterer Vorteil ist, dass der Druckkamm 6a, 6b über eine stoffschlüssige Verbindung mit der Ritzelwelle verbunden ist.

### Bezugszeichenliste

- 1: Getriebe
- 2: Verzahnungsabschnitt
- 3: Welle
- 4: Zahnrad
- 5a: erste axiale Seite
- 5b: zweite axiale Seite
- 6a: erster Druckkamm
- 6b: zweiter Druckkamm
- 7a: erste Stirnfläche des ersten Druckkamms
- 7b: zweite Stirnfläche des ersten Druckkamms
- 8a: erste Stirnfläche des zweiten Druckkamms
- 8b: zweite Stirnfläche des zweiten Druckkamms
- 9: Radiallinie
- 10: Grundkörper
- 11a: erster Flankenbereich des ersten Druckkamms
- 11b: zweiter Flankenbereich des ersten Druckkamms
- 12a: erster Flankenbereich des zweiten Druckkamms
- 12b: zweiter Flankenbereich des zweiten Druckkamms
- 13a: erste Mantelfläche
- 13b: zweite Mantelfläche

## Patentansprüche

1. Getriebe (1) mit einer einen integralen Verzahnungsabschnitt (2) aufweisenden Welle (3) und einem mit dem Verzahnungsabschnitt (2) in Zahneingriff befindlichen Zahnrad (4), wobei in Bezug auf die Welle (3) zu zumindest einer axialen Seite (5a, 5b) des Verzahnungsabschnittes (2) ein Druckkamm (6a, 6b) an der Welle (3) angebracht ist, welcher Druckkamm (6a, 6b) derart dimensioniert ist, dass er den Verzahnungsabschnitt (2) in radialer Richtung zumindest teilweise seitlich überdeckt, **dadurch gekennzeichnet, dass** der Druckkamm (6a, 6b) als ein additiv gefertigter, auf der Welle (3) aufgebrachter Druckkamm (6a, 6b) ausgebildet ist.

2. Getriebe (1) nach Anspruch 1, **dadurch gekennzeichnet, dass** der Druckkamm (6a, 6b) als vollständig umlaufender Steg ausgebildet ist.

3. Getriebe (1) nach Anspruch 1 oder 2, **dadurch gekennzeichnet, dass** der Druckkamm (6a, 6b) mittels selektivem Lasersintern oder Laserpulverauftragsschweißen oder Laserauftragsschweißen aufgebracht ist.

4. Getriebe (1) nach einem der Ansprüche 1 bis 3, **dadurch gekennzeichnet, dass** auf beiden einander abgewandten axialen Seiten (5a, 5b) des Verzahnungsabschnittes (2) jeweils ein Druckkamm (6a, 6b) mittels additiver Fertigung auf der Welle (3) aufgebracht ist.

5. Getriebe (1) nach einem der Ansprüche 1 bis 4, **dadurch gekennzeichnet, dass** der Druckkamm (6a, 6b) an einer axialen Stirnfläche (7a, 8b) oder an beiden axialen Stirnflächen (7a, 7b; 8a, 8b) gegenüber einer ausschließlich in radialer Richtung verlaufenden Radiallinie (9) geneigt ist oder die axiale Kontaktfläche zwischen dem Druckkamm (6a, 6b) und dem Zahnrad (4) ballig ist.

6. Getriebe (1) nach Anspruch 5, **dadurch gekennzeichnet, dass** die Neigung zwischen 0,1° und 1,5° liegt.

7. Getriebe (1) nach einem der Ansprüche 1 bis 6, **dadurch gekennzeichnet, dass** der Druckkamm (6a, 6b) einen Grundkörper (10) aus einem ersten Stahlwerkstoff sowie zumindest einen, stirnseitig an dem Grundkörper (10) aufgebrachten Flankenbereich (11a, 11b; 12a, 12b) aus einem, sich von dem ersten Stahlwerkstoff unterscheidenden, zweiten Stahlwerkstoff aufweist.

8. Getriebe (1) nach einem der Ansprüche 1 bis 7, **dadurch gekennzeichnet, dass** der Druckkamm (6a, 6b) zumindest an einer axialen Stirnfläche (7a, 7b; 8a, 8b) gehärtet ist.

9. Verfahren zur Herstellung einer verzahnten Welle (3) für ein Getriebe (1), wobei in einem ersten Schritt ein Verzahnungsabschnitt (2) der Welle (3) als integraler Bestandteil der Welle (3) hergestellt wird, wobei axial an den Verzahnungsabschnitt (2) unmittelbar angrenzend eine Mantelfläche (13a, 13b) der Welle (3) ausgebildet ist, und wobei in einem zweiten Schritt auf der Mantelfläche (13a, 13b) ein den Verzahnungsabschnitt (2) radial überdeckender Druckkamm (6a, 6b) mittels additiver Fertigung auf der Welle (3) aufgebracht wird.

10. Verfahren nach Anspruch 9, **dadurch gekennzeichnet, dass** nach dem zweiten Schritt die Welle (3) zumindest im Bereich des Verzahnungsabschnittes (2) und des Druckkamms (6a, 6b) gehärtet wird.

## Claims

1. Transmission (1) with a shaft (3) having an integral toothing section (2) and with a gearwheel (4) in meshing engagement with the toothing section (2), wherein a thrust collar (6a, 6b) is attached to the shaft (3) on at least one axial side (5a, 5b) of the toothing section (2) with respect to the shaft (3), which thrust collar (6a, 6b) is dimensioned in such a way that it at least partially laterally covers the toothing section (2) in the radial direction, **characterised in that** the thrust collar (6a, 6b) is designed as an additively manufactured thrust collar (6a, 6b) applied to the shaft (3).

2. Transmission (1) according to claim 1, **characterised in that** the thrust collar (6a, 6b) is designed as a completely circumferential web.

3. Transmission (1) according to claim 1 or 2, **characterised in that** the thrust collar (6a, 6b) is applied by means of selective laser sintering or laser powder deposition welding or laser deposition welding.

4. Transmission (1) according to one of claims 1 to 3, **characterised in that** a thrust collar (6a, 6b) is applied to the shaft (3) on both axial sides (5a, 5b) of the toothing section (2) facing away from each other by means of additive manufacturing.

5. Transmission (1) according to one of claims 1 to 4, **characterised in that** the thrust collar (6a, 6b) is inclined at one axial end face (7a, 8b) or at both axial end faces (7a, 7b; 8a, 8b) relative to a radial line (9) running exclusively in the radial direction, or the axial contact surface between the thrust collar (6a, 6b) and the gearwheel (4) is crowned.

6. Transmission (1) according to claim 5, **characterised in that** the inclination is between 0.1° and 1.5°.

7. Transmission (1) according to one of claims 1 to 6, **characterised in that** the thrust collar (6a, 6b) has a base body (10) made of a first steel material and at least one flank region (11a, 11b; 12a, 12b), applied to the end face of the base body (10), made of a second steel material which differs from the first steel material.

8. Transmission (1) according to one of claims 1 to 7, **characterised in that** the thrust collar (6a, 6b) is hardened at at least on one axial end face (7a, 7b; 8a, 8b).

9. Method for producing a toothed shaft (3) for a transmission (1), wherein in a first step a toothed section (2) of the shaft (3) is produced as an integral component of the shaft (3), wherein a circumferential surface (13a, 13b) of the shaft (3) is formed directly adjacent to the toothing section (2), and wherein in a second step a thrust collar (6a, 6b) radially covering the toothing section (2) is applied to the shaft (3) by means of additive manufacturing on the circumferential surface (13a, 13b).

10. Method according to claim 9, **characterised in that,** after the second step, the shaft (3) is hardened at least in the region of the toothing section (2) and the thrust collar (6a, 6b).

## Revendications

1. Transmission (1) avec un arbre (3) présentant une section de denture (2) intégrale et une roue dentée (4) se trouvant avec la section de denture (2) en prise dentée, dans lequel un peigne de pression (6a, 6b) est monté au niveau de l'arbre (3) par rapport à l'arbre (3) vers au moins un côté axial (5a, 5b) de la section de denture (2), lequel peigne de pression (6a, 6b) est dimensionné de sorte qu'il recouvre au moins partiellement latéralement la section de denture (2) dans le sens radial, **caractérisée en ce que** le peigne de pression (6a, 6b) est formé comme un peigne de pression (6a, 6b) fabriqué de manière additive, appliqué sur l'arbre (3).

2. Transmission (1) selon la revendication 1, **caractérisée en ce que** le peigne de pression (6a, 6b) est formé comme nervure entièrement circonférentielle.

3. Transmission (1) selon la revendication 1 ou 2, **caractérisée en ce que** le peigne de pression (6a, 6b) est appliqué au moyen d'un frittage sélectif au laser ou soudage d'application de poudre laser ou soudage d'application laser sélectif.

4. Transmission (1) selon l'une quelconque des revendications 1 à 3, **caractérisée en ce** quesur les deux côtés (5a, 5b) axiaux éloignés l'un de l'autre de la
section de denture (2), respectivement un peigne de pression (6a, 6b) est appliqué sur l'arbre (3) au moyen de la fabrication additive.

5. Transmission (1) selon l'une quelconque des revendications 1 à 4, **caractérisée en ce que** le peigne de pression (6a, 6b) est incliné au niveau d'une surface avant (7a, 8b) axiale ou au niveau de deux surfaces avant (7a, 7b ; 8a, 8b) axiales par rapport à une ligne radiale (9) s'étendant exclusivement dans le sens radial, ou la surface de contact axiale entre le peigne de pression (6a, 6b) et la roue dentée (4) est bombée.

6. Transmission (1) selon la revendication 5, **caractérisée en ce que** l'inclinaison est comprise entre 0,1° et 1,5°.

7. Transmission (1) selon l'une quelconque des revendications 1 à 6, **caractérisée en ce que** le peigne de pression (6a, 6b) présente un corps de base (10) en un premier matériau d'acier ainsi qu'au moins une zone de flanc (11a, 11b ; 12a, 12b) appliquée côté avant au niveau du corps de base (10) en un second matériau d'acier différent du premier matériau d'acier.

8. Transmission (1) selon l'une quelconque des revendications 1 à 7, **caractérisée en ce que** le peigne de pression (6a, 6b) est durci au moins au niveau d'une surface avant (7a, 7b ; 8a, 8b) axiale.

9. Procédé de fabrication d'un arbre (3) denté pour une transmission (1), dans lequel dans une première étape, une section de denture (2) de l'arbre (3) est fabriquée en tant que partie intégrale de l'arbre (3), dans lequel axialement,
une surface enveloppe (13a, 13b) de l'arbre (3) est formée de manière directement contiguë à la section de denture (2), et dans lequel dans une seconde étape, un peigne de pression (6a, 6b) recouvrant radialement la section de denture (2) est appliqué sur la surface enveloppe (13a, 13b) sur l'arbre (3) au moyen de la fabrication additive.

10. Procédé selon la revendication 9, **caractérisé en ce que** l'arbre (3) est durci après la seconde étape au moins dans la zone de la section de denture (2) et du peigne de pression (6a, 6b).
